# EUROPEAN PATENT APPLICATION

(11) **EP 3 386 070 A1**
(43) Date of publication of application: **10.10.2018**
(21) Application number: 17465510.0
(22) Date of filing: 07.04.2017
(51) Int. Cl.: H02J 50/10, H02J 50/05, H01F 38/14, B60R 9/10, B60L 1/00, B60L 11/18, B60L 11/00

(54) **CHARGING SYSTEM FOR CHARGING AN ACCUMULATOR OF AN ELECTRIC BICYCLE, BICYCLE RACK AND METHOD FOR CHARGING AN ACCUMULATOR**

(71) Applicant: Continental Automotive GmbH, 30165 Hannover (DE)
(72) Inventor: Creanga, Calin-Costin, 307288 Rudicia (RO)

(57) **Abstract**

Charging system for charging an accumulator of an electric bicycle, bicycle rack and method for charging an accumulator

The invention is concerned with a charging system (10) for charging an accumulator (12) of an electric bicycle (14), wherein the charging system (10) comprises a first connector (20) configured to be electrically connected to the accumulator (12). The invention is characterized in that the charging system (10) comprises a second connector (22), which is configured to be electrically connected to a trailer socket (24) of a vehicle (26), and the charging system (10) is configured such that in case the first connector (20) is connected to the accumulator (12) and the second connector (22) is connected to the trailer socket (24) energy is transferable by means of the charging system (10) from the vehicle (26) to the accumulator (12) for charging the accumulator (12).

## Description

The invention is concerned with a charging system for charging an accumulator of an electric bicycle, wherein the charging system comprises a first connector configured to be electrically connected with the accumulator. The invention also relates to a bicycle rack for a vehicle and a method for charging an accumulator of an electric bicycle.

Electric bicycles are known from the prior art and are getting more and more popular. Such bicycles usually comprise an electro motor, which can be used occasionally as drive support when riding the bicycle. The energy for the electric motor of such a bicycle is usually provided by an accumulator like a battery. Such an accumulator has to be charged from time to time. The accumulator usually is charged by connecting the accumulator to a power socket. However, there is not always the possibility to charge the accumulator, e.g. when there is no power socket or electricity grid available, like on a trip. Also, if a family plans to go on holidays with their vehicle, wants to take their electrical bikes with them and notices just before departure, that the accumulators are not charged, the family needs to charge the accumulators first and wait until they are charged before departure as otherwise the electric bicycles cannot be used when arriving at the destination right away. Therefore, the dependency on the availability of electrical infrastructure can be very discomforting.

Therefore it is an object of the present invention to provide a charging system and a method for charging an accumulator of an electric bicycle, which provide more flexibility for charging.

The object is accomplished by the subject matter of the independent claims. Advantageous developments with convenient and nontrivial further embodiments of the invention are specified in the following description, the dependent claims and the figures.

The invention also comprises optional embodiments that provide features which effort additional technical advantages.

The charging system according to the invention for charging an accumulator of an electric bicycle comprises a first connector configured to be electrically connected to the accumulator. Moreover, the charging system comprises a second connector, which is configured to be electrically connected to a trailer socket of a vehicle and the charging system is configured such that in case the first connector is connected to the accumulator and the second connector is connected to the trailer socket energy is transferable by means of the charging system from the vehicle to the accumulator for charging the accumulator.

So advantageously, the accumulator of an electric bicycle can also be charged during a trip by means of the charging system according to the invention, which allows to use energy provided by the vehicle itself to charge the accumulator of the electric bicycle. Furthermore, besides being able to charge the accumulator during the transport of the electric bicycle by means of the vehicle to a certain destination, another great advantage is that charging can be performed independent from the presence of an electrical network. So for example even on holiday trips like going camping where there is no electrical infrastructure, electric bicycles can be charged advantageously by using energy from the vehicle by means of the charging system. Therefore, much more flexibility for charging an accumulator of an electric bicycle can be provided by the charging system according to the invention.

According to an advantageous embodiment of the invention the charging system is configured as a wireless charging system. This advantageous embodiment provides even more comfort for a user, as for charging the accumulator or for terminating the charging no plaque has to be plugged in and plugged out all the time.

Thereby, it's another very advantageous embodiment of the invention, when the charging system comprises a primary device, which comprises the second connector, and a secondary device, which comprises the first connector, wherein the primary device is fixable to a bicycle rack, which is mountable to the vehicle, and wherein the secondary device is fixable to the bicycle, wherein the charging system is configured to transfer energy wirelessly from the primary device to the secondary device. Therefore, when the primary device is fixed to the bicycle rack and the secondary device is fixed to the bicycle the accumulator can easily be charged by simply putting the electric bicycle onto the bicycle rack and driving with the vehicle to the desired destination. After arriving at the destination, the electric bicycle can easily be taken off the bicycle rack again with the accumulator being charged. Therefore advantageously a user has nothing more to do than putting the electric bicycle on the bicycle rack and taken it off as usual, and charging is performed without the need of any in interaction of the user itself.

The energy transfer from the primary device to the secondary device can for example be performed by inductive coupling of the primary device with a secondary device. Alternatively, energy can also be transferred from the primary device to the secondary device by capacitive coupling of the primary device with the secondary device. Therefore a plurality of possibilities for performing such a contactless energy transfer is available. Contactless should be understood in the sense of no direct electrical contact between the primary device and the secondary device, but there can be a mechanical contact between the primary device and the secondary device. A mechanical contact is even very advantageous, as the closer the primary device to the secondary device is positioned, the more effective can the energy transfer be performed.

According to another advantageous embodiment of the invention the primary device comprises a transmitter for transmitting energy to the secondary device, wherein the secondary device comprises a receiver for receiving the energy. As already mentioned, this energy transfer can be performed by inductive coupling of the transmitter and the receiver or by capacitive coupling of the transmitter and receiver or other means of wireless coupling of the transmitter and the receiver for transferring the energy.

According to another advantageous embodiment of the invention the secondary device comprises a first mount for fixing the secondary device to the bicycle and the secondary device is configured such that the position of the receiver relative to the mount is adjustable. This has the great advantage, that the receiver can be easily adjusted in its position with regard to the position of the transmitter without having to fix the secondary device at a precise position at the bicycle and the primary device at a precise position of the bicycle rack, such that these precise positions are exactly coordinated to each other. By means of the advantageous adjustability of the receiver relative to the mount, the gap between the transmitter and the receiver can be easily adjusted such that it is as small as possible, when the bicycle is carried on the rack. So, when putting the bicycle on to the bicycle rack the receiver can easily be adjusted to be positioned correctly with respect to the transmitter to optimize the energy transfer. Also my means of this advantageous embodiment, the charging system is easily customizable and adaptable for any kind and size of bicycle racks and any kind and size of electric bicycles.

For this purpose, the receiver can for example be fixed to the mount and be bendable, rotatable, pivotable, tiltable and/or laterally movable in different directions. The secondary device may comprise an adjustment device for adjusting the position of the transmitter with respect to the mount. The adjustment device can for example comprise joint, like a ball joint or hinge joint, or an extendable telescopic rod or thread rod or the like. The receiver can also be mounted by means of a strong but flexible and bendable wire. So by all these means the receiver can be adjusted in its position very flexible and be fixed at the same time.

According to another advantageous embodiment of the invention the primary device comprises a second mount for fixing the primary device to the bicycle rack and the primary device is configured such that the position of the transmitter related to the mount is adjustable. Thereby, the same advantages can be achieved as already explained with regard to the adjustment adjustability of the secondary device. Also same adjustment devices can be used as part of the primary device for adjusting its position with regard to the mount.

Moreover, also the mount itself can be adjustable to different sizes, e.g. of the frame of the bicycle, so that the mount can easily be fixed to the bicycle frame of different bicycles having different dimensions. The mount can comprise for example an adjustable clamp, or a clip or other adjustable fixing device. Thereby the mount can easily be attached to any bicycle.

According to another advantageous embodiment of the invention the charging system is configured to determine a current state of charge of the accumulator during a charging procedure and to transmit the determined current state of charge to a predefined receiving device, especially a mobile device and/or the vehicle. So, advantageously, a user and can be informed anytime about the current state of charge of the accumulator. Especially, this has the great advantage, that the user can also be informed about the current state of charge, even if the user is not near to the charging system, and for example currently driving in the vehicle.

For transmitting the current state of charge of the accumulator the charging system can comprise a communication device like another transmitter for transmitting data comprising the information about the current state of charge to the mobile device or to the vehicle. Also such a communication device can comprise another receiver, for example for receiving a request from the mobile device or from the vehicle for providing the information about the current state of charge. The communication can be based on any standard for communication systems, like radio communication, especially WLAN, Bluetooth, mobile communications, IrDA or others. Moreover, the communication device can be part of the secondary device and therefore be connected to the accumulator of the bicycle directly.

Additionally or alternatively the charging system, especially the secondary device, can comprise optical indicators, like LEDs or other light sources, for indicating the current state of charge. For example a green light may indicate, that the accumulator is fully charged, whereas a red light can indicate, that the accumulator is not fully charged yet. Also the number of illuminating light sources or LEDs can indicate the current state of charge, for example if only one LED is illuminating, the current state of charge is low, if three LEDs are illuminating, the accumulator is about half-charged, and if three LEDs are illuminating, the accumulator is fully charged. In general, the charging system may comprise any display for indicating the current state of charge. This has the advantage, that a user can directly see the current state of charge on the charging system itself.

According to another advantageous embodiment of the invention the charging system is configured to initiate the charging of the accumulator automatically in case the first connector is connected to the accumulator. Especially, in case the first connector is connected to the accumulator, the charging system can be configured to initiate the charging automatically as soon as the second connector is connected to the trailer socket and/or the transmitter and the receiver comprise a distance to each other smaller than a predefined threshold. So on the one hand, if the first connector is connected to the accumulator and the bicycle is already positioned on the bicycle rack and the receiver and transmitter are aligned to each other, the charging can be initiated by the charging system automatically as soon as the second connector is plugged into the trailer socket. On the other hand, if the first connector is connected to the accumulator and also the second connector is already connected to the trailer socked, the charging can automatically be initiated as soon as the user placed the bicycle on the bicycle rack, and optionally aligns the transmitter and receiver to each other. So advantageously, a user can put bicycle on the bicycle rack and the charging of the accumulator is started automatically without the need of any user interaction.

Additionally or alternatively the charging system can also comprise a manual start button for starting the charging procedure. Also, the charging system may be configured, for example by means of the above described communication device, to receive a charging request, for example from a mobile device or from the vehicle, and to start the charging procedure in dependency of the reception of the charging request. So advantageously, there are many advantageous possibilities to start the charging procedure in a very comfortable way, like automatically, manually and directly on the charging system, from inside the vehicle or at any remote location by means of a mobile device. Also the charging procedure can either be stopped automatically, for example as soon as the accumulator is fully charged, and optionally additionally the charging procedure can terminated by a user, for example again by means of a stop button, by means of a mobile device on my any controls inside the vehicle, wherein the termination request sent from the vehicle and/or the mobile device can again be received by the communication device of the charging system.

According to another advantageous embodiment of the invention, the primary device comprises several transmitters and the charging system comprises several secondary devices, wherein each of the several transmitters is separately fixable to certain positions of the bicycle rack and wherein each of the secondary devices is separately fixable to different electric bicycles. Accordingly, in case the bicycle rack comprises several carriers, each carrier configured to carry one electric bicycle, each transmitter can be positioned on a respective carrier, for example by means of a respective mount. Moreover, all the transmitters can be connected to the second connector, which is connectable to the trailer socket. So advantageously, each of the transmitters can be power supplied by the trailer socket. Furthermore, each of the secondary devices can be positioned, for example each by means of a separate mount, on an electric bicycle and be connected to the respective accumulators. Consequently, also multiple electric bicycles can be carried by the bicycle rack and be charged simultaneously. Moreover, each of the several secondary devices can be configure as described before, e.g. comprising a communication device, an adjustment device, optical indicators, a start/stop button, and so on.

The invention also relates to a bicycle rack for a vehicle, wherein the bicycle rack comprises a charging system according to the invention or one of its embodiments. Preferably, the bicycle rack is configured to be mounted on a towing hook of the vehicle. This is very advantageous, because then the second connector can easily be connected to a trailer socket of the vehicle, which is usually also positioned near the towing hook. However, the bicycle rack can also be configured to be mounted on the rooftop of the vehicle. The wire for connecting the transmitter to the second connector can for example also be guided by guidance means around the rear window to connect the second connector to the trailer socket.

The advantages described with regard to the charging system according to the invention and its embodiments also apply for the bicycle rack according to the invention.

Moreover, the invention also relates to a method for charging an accumulator of an electric bicycle by means of a charging system comprising a first connector connected to the accumulator. The charging system comprises a second connector connected to a trailer socket of a vehicle and the charging system transfers energy from the vehicle to the accumulator for charging the accumulator. Preferably, the charging system is a charging system according to the invention or one of its embodiments. Furthermore, the advantages described with regard to the charging system according to the invention and its embodiments also apply for the method for charging an accumulator according to the invention. Moreover the features described with regard to the charging system according to the invention and its embodiments also provide further corresponding embodiments of the method according to the invention.

In the following exemplary implementations of the invention are described. The figures show:
- Fig.1: a schematic illustration of a charging system according to a first embodiment of the invention;
- Fig.2: a schematic illustration of a charging system according to a second embodiment of the invention;
- Fig.3: a schematic illustration of a bicycle rack with the primary device of the charging system according to an embodiment of the invention;
- Fig.4: a schematic illustration of an electric bicycle with a secondary device of the charging system according to an embodiment of the invention; and
- Fig.5: a vehicle with the bicycle rack comprising a primary device of a charging system according to an embodiment of the invention.

The embodiments explained in the following are preferred embodiments of the invention. However, in the embodiments, the described components of the embodiments each represent individual features of the invention which are to be considered independently of each other and which each develop the invention also independently of each other and thereby are also to be regarded as a component of the invention in individual manner or in another than the shown combination. Furthermore, the described embodiments can also be supplemented by further features of the invention already described.

In the figures elements that provide the same function are marked with identical reference signs.

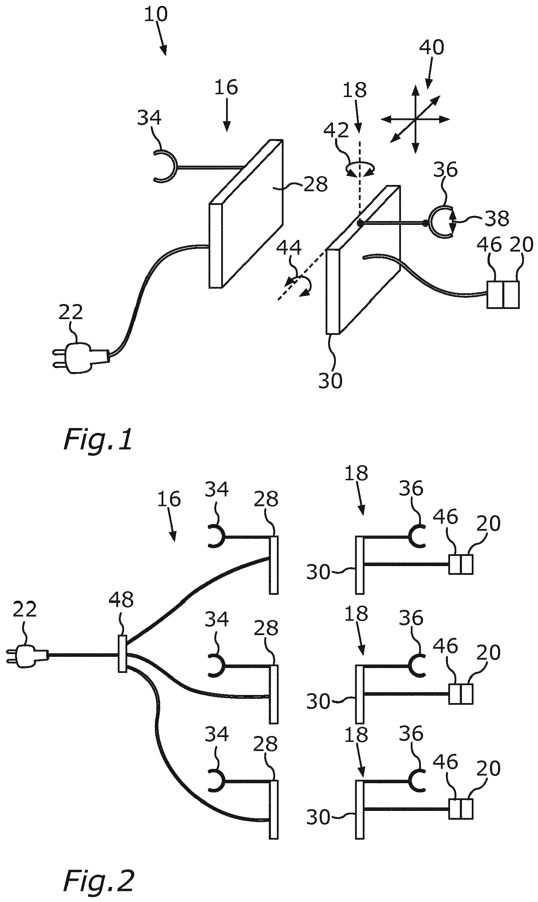

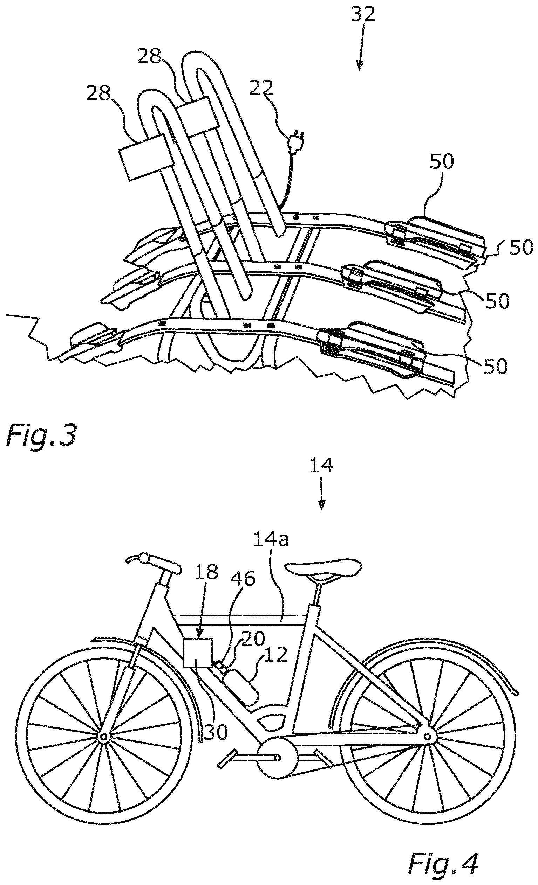

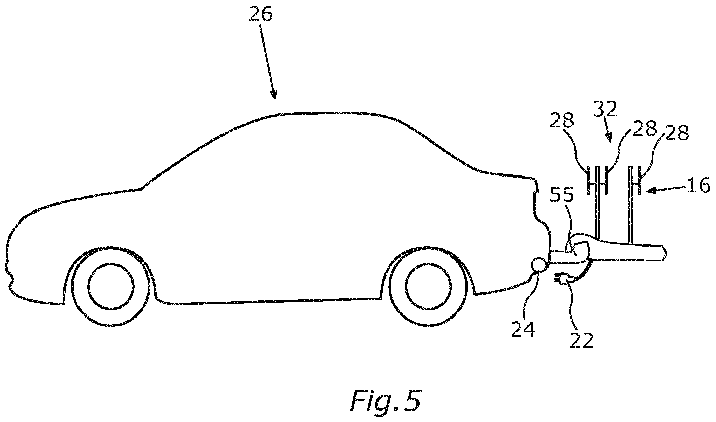

Fig. 1 shows a schematic illustration of a charging system 10 for charging an accumulator 12 (compare Fig. 4) of an electric bicycle 14 (compare Fig. 4) according to the first embodiment of the invention. The charging system 10 comprises a primary device 16 and a secondary device 18. The secondary device comprises a first connector 20, which is configured to be electrically connected to the accumulator 12. Furthermore, the primary device 16 comprises a second connector 22 which is configured to be connected to a trailer socket 24 of a vehicle 26 (compare Fig. 5). Moreover, the primary device 16 comprises a transmitter 28 and the secondary device 18 comprises a respective receiver 30. When the secondary connector 22 is connected to the trailer socket 24, energy from the vehicle 24 can be transferred wirelessly by means of the transmitter 28 to the receiver 30 of the secondary device 18 for charging the accumulator 12. The energy transfer can be provided by means of a inductive or capacitive coupling of the transmitter 28 and the receiver 30.

Furthermore, the primary device 16 is configured to be fixed to the bicycle rack 32 and (compare Fig. 3). For this purpose, the primary device 16 can comprise a mount 34, by means of which the primary device 16 can be attached to the bicycle rack 32. On the other hand, the secondary device 18 is configured to be fixed to the electric bicycle 32 and for this purpose also may comprise a mount 36. The mount 36 of the secondary device 18 may be configured to be adjustable, which is illustrated in Fig. 1 by the double arrow 38. So the mount 36 can be adapted to different sizes and dimensions of frames of bicycles. For optimizing the conditions for the energy transfer from the transmitter 28 to the receiver 30, the transmitter 28 and the receiver 30 should be positioned as close as possible to each other and preferably comprise a distance ranging from 0 cm to 0.5 cm at the most during charging. To make the alignment of the receiver 30 and the transmitter 28 as easy as possible, the receiver 30 can be adjustable in its position with respect to the mount 36. For example the secondary device 18 can be configured such that the receiver 30 is adjustable with respect to the mount 36 in one, two or three independent directions, which is illustrated by the three double arrows 40. Additionally or alternatively, the receiver 30 may also be rotatable, illustrated by the double arrow 42, or tiltable, illustrated by the double error 44. Alternatively or additionally, also the transmitter 28 can be adjustable in its position with regard to the mount 34. So the charging system 10 can be made perfectly fit for any bicycle rack 32 and any bicycle 14 and always perfect alignment of the transmitter 28 with regard to the receiver 30 can be ensured.

Furthermore, the charging system 10 can also be configured to determine a current state of charge of the accumulator 12 and to transmit the determined current state of charge to a device, like the vehicle 28 or also a mobile device of the user. For this purpose, the charging system 10, especially the secondary device 18, can comprise a communication device 46, which is configured to communicate with the vehicle 26 and/or a mobile device and by means of which a determined state of charge of the accumulator 12 can be a provided to the vehicle 26 and/or a mobile device.

The charging system 10 can also comprise further advantages features, like indication lights or a display for indicating the current state of charge of the accumulator 12, one or more buttons for manually starting or terminating the charging process. Furthermore, the charging system 10 can also be configured to start or terminate the charging process by receiving a respective request from the vehicle 26 or mobile device by means of the communication device 46.

Fig. 2 shows a charging system can according to a second embodiment of the invention. The charging system 10 in this case comprises several transmitters 28 and several corresponding secondary devices 18, each comprising a respective receiver 30. Each of the secondary devices 18 can be configured as already described with regard to Fig. 1. Moreover each of the transmitter 28 of the primary device 16 is connected or connectable to the second connector 22. Also, the primary device may comprise some kind of multiple socket48, so that each of the transmitters 28 can be connected to the second connector 22 separately and be detached from the second connector 22 separately. Consequently, the number of transmitters 28 and receivers 30 can advantageously be adapted to the number of bicycles 14 to be transported by the bicycle rack 32 and to be charged. So several electric bicycles 14 can be charged simultaneously. Also each of the transmitters 28 can be attached to a respective mount 34 for fixing the respective transmitters 28 to the bicycle rack 32. This is now illustrated in Fig. 3.

Fig. 3 shows at schematic illustration of a bicycle rack 32 according to an embodiment of the invention. The bicycle rack 32 comprises a primary device 16 of a charging system 10 according to an embodiment of the invention. Moreover, the bicycle rack 32 can have several carriers 50, each configured to carry a bicycle, especially an electric bicycle 14. Moreover, one or more transmitters 28 can be fixed to the bicycle rack 32, wherein in this example two transmitters 22 are illustrated. These transmitters 28 are connected to the second connector 22, which is configured to be plugged into the trailer socket 24.

Fig. 4 shows a symmetric illustration of an electric bicycle 14 with an accumulator 12 and the secondary device 18 connected to the accumulator 12 according to an embodiment of the invention. By means of the mount 36 the secondary device 18 can be attached to the frame 14a of the bicycle 14 as already explained with regard to Fig. 1. Moreover, Fig. 4 shows the first connector 20 of the secondary device 18 connected to the accumulator 12.

So the bicycle 14 shown in Fig. 4 can easily be positioned on a carrier 50 of the bicycle rack 32 and by means of the inductive or capacitive coupling of the transmitter 28 and the receiver 30 the electric charging of the accumulator 12 can easily be performed.

Fig. 5 shows a schematic illustration of a vehicle 26 with the bicycle rack 32 attached to a towing hook 52 of the vehicle. The bicycle rack 32 again comprises a primary device 16 of the charging system 10 according to an embodiment of the invention. In this embodiment, the primary device 16 comprises three transmitters 28. The transmitters 28 are again connected with the second connector 22 of the primary device 16. As can be seen, the second connector 22 can be easily plugged into the trailer socket 24 of the vehicle 26.

Overall, the examples show how wireless charging of an electric bicycle can be provided by the invention in very advantages ways. By means of the charging system of the invention and its embodiments, electric bicycles can be charged independently from the presence of any electrical grid. Especially, electric bicycles can be charged by means of the invention and its embodiments advantageously during transport and driving to a desired destination. So the invention and its embodiments provide much more comfort and flexibility for charging an accumulator of electric bicycles.

### Reference signs

- 10: charging system
- 12: accumulator
- 14: electric bicycle
- 16: primary device
- 18: secondary device
- 20: first connector
- 22: second connector
- 24: trailer socket
- 26: vehicle
- 28: transmitter
- 30: receiver
- 32: bicycle rack
- 34: mount
- 36: mount
- 38: double arrow
- 40: double arrows
- 42: double arrow
- 44: double arrow
- 46: communication device
- 48: multiple socket
- 50: carrier
- 52: towing hook

## Claims

1. Charging system (10) for charging an accumulator (12) of an electric bicycle (14), wherein the charging system (10) comprises a first connector (20) configured to be electrically connected to the accumulator (12),
**characterized in that**
the charging system (10) comprises a second connector (22), which is configured to be electrically connected to a trailer socket (24) of a vehicle (26), and the charging system (10) is configured such that in case the first connector (20) is connected to the accumulator (12) and the second connector (22) is connected to the trailer socket (24) energy is transferable by means of the charging system (10) from the vehicle (26) to the accumulator (12) for charging the accumulator (12).

2. Charging system (10) according to claim 1, wherein the charging system (10) is configured as a wireless charging system (10).

3. Charging system (10) according to claim 2, wherein the charging system (10) comprises a primary device (16), which comprises the second connector (22), and a secondary device (18), which comprises the first connector (20), wherein the primary device (16) is fixable to a bicycle rack (32), which is mountable to the vehicle (26), and wherein the secondary device (18) is fixable to the bicycle (14), wherein the charging system (10) is configured to transfer energy wirelessly from the primary device (16) to the secondary device (18).

4. Charging system (10) according to claim 3, wherein the primary device (16) comprises a transmitter (28) for transmitting energy to the secondary device (18), wherein the secondary device (18) comprises a receiver (30) for receiving the energy.

5. Charging system (10) according claim 4, wherein the secondary device (18) comprises a first mount (36) for fixing the secondary device (18) to the bicycle (14) and the secondary device (18) is configured such that the position of the receiver (30) relative to the first mount (36) is adjustable.

6. Charging system (10) according to claim 4 or 5, wherein the primary device (16) comprises a second mount (34) for fixing the primary device (16) to the bicycle rack (32) and the primary device (16) is configured such that the position of the transmitter (28) relative to the second mount (34) is adjustable.

7. Charging system (10) according to one of the preceding claims, wherein the charging system (10) is configured to determine a current state of charge of the accumulator (12) during a charging procedure and to transmit the determined current state of charge to a predefined receiving device, especially a mobile device and/or the vehicle (26).

8. Charging system (10) according to one of the preceding claims, wherein in case the first connector (20) is connected to the accumulator (12) the charging system (10) is configured to initiate the charging of the accumulator (12) automatically, especially as soon as the second connector (22) is connected to the trailer socket and/or the transmitter (28) and the receiver (30) comprise a distance to each other smaller than a predefined threshold.

9. Charging system (10) according to one of claims 4 to 8, wherein the primary device (16) comprises several transmitters (28) and the charging system (10) comprises several secondary devices (18), wherein each of the several transmitters (28) is separately fixable to certain positions of the bicycle rack (32) and wherein each of the secondary devices (18) is separately fixable to different electric bicycles (14).

10. Bicycle rack (32) for a vehicle (26), wherein the bicycle rack (32) comprises a charging system (10) according to one of the preceding claims.

11. Bicycle rack (32) according to claim 9, wherein the bicycle rack (32) is configured to be mounted on a towing hook (52) of the vehicle (26).

12. Method for charging an accumulator (12) of an electric bicycle (14) by means of a charging system (10) comprising a first connector (20) connected to the accumulator (12),
**characterized in that**
the charging system (10) comprises a second connector (22) connected to a trailer socket (24) of a vehicle (26), and the charging system (10) transfers energy from the vehicle (26) to the accumulator (12) for charging the accumulator (12).
